# EUROPÄISCHE PATENTSCHRIFT

(11) **EP 2 366 539 B1**
(45) Veröffentlichungstag und Bekanntmachung des Hinweises auf die Patenterteilung: **08.05.2013**
(21) Anmeldenummer: 11153562.1
(22) Anmeldetag: 07.02.2011
(51) Int. Cl.: B32B 1/08, B32B 7/02, B32B 27/28, B32B 27/32, B32B 27/34, F16L 9/133, F16L 11/04, C08L 77/06, C08L 23/16, C08L 51/06, C08L 23/12

(54) **Zweilagiges Kunststoff-Leitungsstück für druckbeaufschlagte Flüssigkeitsleitungen**
Two-layer plastic tubing part for pressurised fluid lines
Pièce de conduite en plastique à deux couches pour conduites de liquide pressurisées

(30) Priorität: 15.03.2010 EP 10156529
(43) Veröffentlichungstag der Anmeldung: 21.09.2011
(73) Patentinhaber: EMS-PATENT AG, 7013 Domat / Ems (CH)
(72) Erfinder: Kettl, Ralph, 7417, Paspels (CH); Pfleghar, Mark, 7013, Domat/Ems (CH)
(74) Vertreter: OK pat AG

(56) Entgegenhaltungen:
- EP-A1- 1 864 796
- DE-C1- 4 428 236

## Beschreibung

Die Erfindung betrifft gemäss dem Oberbegriff des unabhängigen Anspruchs 1 ein zweilagiges Kunststoff-Leitungsstück für druckbeaufschlagte Flüssigkeitsleitungen mit einer Innenschicht und mit einer Aussenschicht. Die Innenschicht ist aus einer ersten Mischung aufgebaut, welche ein elastomeres Copolyolefin oder einen Blend aus einem teilkristallinen Polyolefin und einem synthetischen olefinischen Kautschuk, sowie ein Homopolyamid umfasst. Die Aussenschicht ist aus einer zweiten Mischung aufgebaut, welche ein Homopolyamid umfasst. Derartige Leitungen bzw. Rohre finden unter anderem in der Industrie und beim Automobilbau Anwendung; bevorzugt sind dabei Kühlleitungen für Automobile.

Unter dem Namen ECOSYS ist seit längerem ein ökonomisches System von Kühlflüssigkeitsleitungen (Design gemäss EMS-CHEMIE AG, Domat/Ems, Schweiz) bekannt, wobei diese Kühlflüssigkeitsleitungen statt aus Gummi aus thermoplastischen Kunststoffen bestehen. Zur Erreichung gleicher Biegeflexibilität wie bei herkömmlichen Gummileitungen werden die (vom Material her etwas härteren) Kunststoffleitungen oft abschnittweise gewellt ausgeführt. In der Regel weisen die Kunststoff-Kühlflüssigkeitsleitungen zwei oder drei Schichten auf, wobei die Innenschicht gegenüber dem heissen Wasser/Glykol-Gemisch im Motor-Kühlkreislauf hydrolysebeständig sein muss.

Die Aussenschicht muss gegen äussere Einflüsse einen Schutz bieten (z.B. mechanisch gegen Schlag) und chemisch beständig sein (z.B. gegenüber Streusalz im Winter). Zudem muss eine solche Leitung als Ganzes berstdruckbeständig sein (weil der Kühlkreislauf unter einem Flüssigkeits-Innendruck steht) und überdies auch den hohen Temperaturen der Kühlflüssigkeit und den Umgebungs-Lufttemperaturen in der Nähe des Motors langzeitig standhalten.

Als Innenschicht kommen vor allem Polyolefine (mit genügender Temperaturbeständigkeit) in Frage, mit Vorteil solche, die ein gewisses elastomeres Verhalten aufweisen, z.B. elastomere Copolyolefine oder Blends aus teilkristallinen Polyolefinen (z.B. Polypropylen = PP) und synthetischen olefinischen Kautschuken (z.B. Ethylen-Propylen-Dien-Kautschuk = EPDM). Die Elastizität ergibt eine Dichtungsfunktion beim Aufstecken der Schläuche auf die Anschlussstutzen.

Eine geeignete Klasse von Polyolefinelastomeren sind Blends aus PP und EPDM, wobei das EPDM bevorzugt vernetzt ist. Solche Blends sind z.B. unter dem Handelsnamen Santoprene^{™} (Handelname der Exxon Mobil Corp. Irving, TX 75039, USA), erhältlich. Je nachdem können solche Blends als Spezialtypen noch haftvermittelnde oder funktionalisierte Zusätze enthalten, damit sie z.B. an Polyamid haften.

Mehrlagige, Polyamide umfassende Kunststoffrohre sind bekannt und werden im Fahrzeugbau zum Beispiel für Kühlleitungen von Automobilen eingesetzt:
Gemäss DE 44 28 236 C1 umfassen solche Mehrschicht-Rohrleitungen für Fluide eine äussere Polyamidschicht und eine innere Kunststoffschicht aus einem modifizierten thermoplastischen Elastomer mit vollvernetzter Kautschukphase, z.B. EPDM.
Der diese beiden Schichten üblicherweise verbindende Haftvermittler (d.h. die Haftvermittlerschicht) kann gemäss DE 44 28 236 C1 dadurch entfallen, dass das Elastomer der inneren Kunststoffschicht ein Copolymer eines funktionalisierten Polyolefins als Hauptbestandteil und ein Polyamid enthält.

Gemäss EP 1 362 890 A1 kann eine solche druckbeaufschlagte Fluidleitung glatt ausgebildet sein oder zumindest teilweise gewellte Wandungen aufweisen, so das sie eine gewellte Mehrschicht-Polymer-Rohrleitung mit reduzierter Längenänderung bildet. Bevorzugt weist diese druckbeaufschlagte Fluidleitung eine sogenannte "Hart-Weich-Kombination" mit einer äusseren Schicht aus einem härteren Polymer oder einer Polymermischung und mit einer inneren Schicht aus einem kautschukelastischen Polymer oder einer Polymermischung auf. Bevorzugt werden diese Fluidleitungen durch Co-Extrusion hergestellt, wobei die beiden Schichten ohne zusätzliche Haftvermittler oder Haftvermittlerschichten (wie diese z.B. aus EP 0 745 898 B1 bekannt sind) direkt und beständig aufeinander haften.

In der deutschen Offenlegungsschrift DE 101 16 427 A1 wird ein mehrschichtiger Schlauch für ein Kraftfahrzeug-Kühlsystem offenbart, der wenigstens zwei Schichten umfasst, wobei das Material für die innere Schicht eine Mischung ist, die ein Polymer mit einer Carboxylgruppe und/oder ihrem Derivat und ein thermoplastisches Elastomeres mit einer Carboxylgruppe und/oder ihrem Derivat enthält. Dabei ist das thermoplastische Elastomer ein dynamisch vernetztes Olefinelastomer mit Anteilen von Ethylen-α-Olefincopolymeren aus Ethylen und einem α-Olefin mit 3 bis 12 Kohlenstoffatomen. Zudem enthält das thermoplastische Elastomer Anteile eines Propylenharzes. Das Material der äusseren Schicht umfasst ein thermoplastisches Polyamidharz.

Im Dokument EP 1 864 796 A1 wird eine Mehrschichtstruktur beschrieben, die mindestens zwei Schichten, A (bevorzugt aussen) und B (bevorzugt innen) umfasst, und die ein Rohr für Anwendungen im Automobilbereich, insbesondere eine Kraftstoffleitung sein kann. Als wesentliche Komponente beider Schichten steht dort ein teilaromatisches Polyamid (X) im Vordergrund. Zweite obligatorische Komponente in beiden Schichten ist ein Schlagzähmodifikator. Zudem wird erwähnt, dass die Formmassen der beiden Schichten neben den Mindestmengenanteilen der beiden obligatorischen Komponenten gegebenenfalls noch weitere thermoplastische Polymere enthalten können, unter anderem aliphatische Polyamide bis zu einem maximalen Anteil von 60 Gew.-%.

Bei dem bekannten System ECOSYS 2 (Design gemäss EMS-CHEMIE AG, Domat/Ems, Schweiz) besteht die Aussenschicht einer zweischichtigen Kühlflüssigkeitsleitung aus Polyamid 12 (PA 12) und die Innenschicht aus einem Santoprene-Elastomer (vgl. auch EP 1 362 890 A1). Diese Lösung erfüllt jedoch die höheren Anforderungen nicht mehr, die sich aus einer Dauergebrauchstemperatur der insbesondere neuere Motoren umgebenden Luft von > 125 °C ergeben.

Die genauen, beispielsweise aus der PSA-Norm B22 6142 (PEUGEOT-CITROEN) vom 5. August 2004 bekannten Betriebsbedingungen und die daraus resultierenden Temperaturklassen sind in der folgenden Tabelle 1 wiedergegeben (vgl. Tabelle Seite 11/26 dieser Norm).

**Tabelle 1, PSA-Norm B22 6142:**

| **Kühlmittel** | | | **Umgebung** | | | | | | | | |
|---|---|---|---|---|---|---|---|---|---|---|---|
| | **Kühlmittel-Temperatur** | | **Lufttemperatur** | | | | | | | | |
| | | | 100 | 110 | 125 | 135 | 150 | 165 | 175 | 200 | Temperatur-Klasse |
| Kontinuierlich | 95 % | 95 °C | 100 | 110 | 125 | 135 | 150 | 165 | 175 | 200 | Umgebungs-Temperatur |
| Spitzenwert 1 | 4 % | 118 °C | 125 | 125 | 150 | 150 | 175 | 175 | 200 | 225 | Spitzen-Temperatur |
| Spitzenwert 2 | 1 % | 136 °C | 125 | 125 | 150 | 150 | 175 | 175 | 200 | 225 | |

Dabei bezeichnet die Umgebungstemperatur eine Aussentemperatur, gegenüber der die Kühlleitungen während 99 % ihrer Lebenszeit ausgesetzt sind. Die Spitzentemperatur bezeichnet eine Aussentemperatur, gegenüber der die Kühlleitungen während 1 % ihrer Lebenszeit ausgesetzt sind. Die Validierung einer Klasse setzt die Validierung aller tieferen Temperatur-Klassen für das gleiche Material voraus, wobei die Klassen 125 und 150 normalerweise als die wichtigsten Klassen betrachtet werden.

Die Aufgabe der vorliegenden Erfindung besteht darin, ein zweilagiges Kunststoff-Leitungsstück für druckbeaufschlagte Flüssigkeitsleitungen vorzuschlagen, welches den Anforderungen der Temperaturklasse 150 °C entspricht.

Diese Aufgabe wird durch die im Anspruch 1 definierten Merkmale gelöst, indem dieser Anspruch ein zweilagiges Kunststoff-Leitungsstück für druckbeaufschlagte Flüssigkeitsleitungen definiert, das eine Innenschicht und eine Aussenschicht umfasst. Die Innenschicht ist aus einer ersten Mischung aufgebaut, welche ein elastomeres Copolyolefin oder einen Blend aus einem teilkristallinen Polyolefin und einem synthetischen olefinischen Kautschuk, sowie ein Homopolyamid umfasst. Die Aussenschicht ist aus einer zweiten Mischung aufgebaut, welche ein Homopolyamid umfasst. Das erfindungsgemässe zweilagige Kunststoff-Leitungsstück für druckbeaufschlagte Flüssigkeitsleitungen ist dadurch gekennzeichnet, dass beide Mischungen, aus denen die Innenschicht und die Aussenschicht aufgebaut sind, das gleiche Homopolyamid umfassen, und dass jeder dieser Mischungen ein Schlagzähmodifikator aus der Klasse der säuremodifizierten Ethylen-α-Olefin-Copolymere beigemischt ist, wobei das Homopolyamid einen Schmelzpunkt von über 200 °C und durchschnittlich mindestens 8 C-Atome pro Monomereinheit aufweist und ausgewählt ist aus der Gruppe PA 610, PA 612, PA 614 und PA 616, und dass das Homopolyamid in der Mischung, aus der die Aussenschicht aufgebaut ist, in einem Anteil von mindestens 65 Gew.-%, bezogen auf 100 Gew.-% der Mischung, vorliegt.

Weitere bevorzugte und erfinderische Merkmale ergeben sich aus den abhängigen Ansprüchen.

Das erfindungsgemässe zweilagige Kunststoff-Leitungsstück für druckbeaufschlagte Flüssigkeitsleitungen umfasst folgende Vorteile:
- Die beiden Schichten der zweilagigen Kunststoff-Leitung sind beide aus einer Mischung aufgebaut, welche jeweils dasselbe Homopolyamid und einen Schlagzähmodifikator aus der Klasse der säuremodifizierten Ethylen-α-Olefin-Copolymere umfassen. Dank diesen, beiden Schichten gemeinsamen, Komponenten haften diese beiden Schichten gut aneinander, ohne dass ein zusätzlicher Haftvermittler zugegeben oder eine zusätzliche Haftvermittlerschicht zwischen der Innen- und Aussenschicht angeordnet werden müsste.
- Das bevorzugt verwendete Polyamid PA 612 hat gegenüber dem früher als Aussenschicht verwendeten Polyamid PA 12 einen höheren Schmelzpunkt (215 °C an Stelle von 178 °C), was die Temperaturbeständigkeit gegenüber den herkömmlich verwendeten Aussenschichten aus PA 12 erhöht.
- Gegenüber dem vom ähnlichen Schmelzpunkt her eventuell auch noch in Frage gekommenen Polyamid PA 6 hat das bevorzugte PA 612 zudem den Vorteil, dass es auf Grund der höheren durchschnittlichen Anzahl C-Atome pro Monomereinheit (und der dadurch erhöhten Hydrophobie) weitgehend hydrolysebeständig ist und deshalb auch in der Innenschicht als Materialkomponente verwendet werden kann.

Geeignete Polyamide im Rahmen der Spezifikation des Anspruchs 1, für welche die oben genannten Vorteile auch gelten, sind neben dem bevorzugten PA 612 auch PA 610, PA 614 und PA 616.

Der Schlagzähmodifikator liegt in der Mischung, aus der die Innenschicht aufgebaut ist, vorzugsweise in einem Anteil von 2-55 Gew.-%, bevorzugt in einem Anteil von 15-45 Gew.-%, und besonders bevorzugt in einem Anteil von 25-35 Gew.-%, jeweils bezogen auf 100 Gew.-% der Mischung, vor. Ganz speziell bevorzugt wird ein Schlagzähmodifikator-Gehalt der Mischung für die Innenschicht von 30 Gew.-%.

Der Schlagzähmodifikator liegt in der Mischung, aus der die Aussenschicht aufgebaut ist, vorzugsweise in einem Anteil von 1-50 Gew.-%, bevorzugt in einem Anteil von 10-30 Gew.-%, und besonders bevorzugt in einem Anteil von 15-25 Gew.-%, jeweils bezogen auf 100 Gew.-% der Mischung, vor. Ganz speziell bevorzugt wird ein Schlagzähmodifikator-Gehalt der Mischung für die Aussenschicht von 20 Gew.-%.

Für Polyamidformmassen geeignete Schlagzähmodifikatoren sind dem Fachmann bekannt, zum Beispiel aus der EP 0 654 505 B1, wo in den Absätzen [0035] bis [0052] verschiedene Klassen von Schlagzähmodifikatoren beschrieben sind.

Vorzugsweise ist der Schlagzähmodifikator aus der Klasse der säuremodifizierten Ethylen-α-Olefin-Copolymere in beiden Mischungen, aus denen die Innenschicht und die Aussenschicht aufgebaut sind, ein mit MAH gepfropftes Ethylenpropylen/Ethylenbutylen-Copolymer (MAH ist die Abkürzung für Maleinsäureanhydrid). Speziell bevorzugt wird das entsprechende Produkt TAFMER MC201 (Mitsui Chemicals Inc., Tokyo, Japan) als Schlagzähmodifikator. Beim TAFMER MC201 beträgt der gepfropfte MAH-Gehalt 0.5 bis 0.7 Gew.-%, der EP (Ethylenpropylen) Copolymeranteil beträgt 65-70 Gew.-%, und der EB (Ethylenbutylen) Copolymeranteil 30-35 Gew.-%; zudem beträgt der MFR-Wert (melt flow rate) gemessen bei 230 °C und 2.16 kg Gewicht bevorzugt zwischen 1.2 und 1.4 g/10 min.

Vorzugsweise ist das Homopolyamid in den beiden Mischungen, aus denen die Innenschicht und die Aussenschicht aufgebaut sind, das Polyamid PA 612. Dieses Homopolyamid hat folgende Strukturformel: 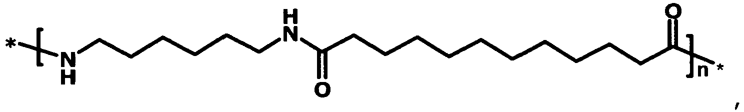 wobei PA 612 durchschnittlich 9 C-Atome pro Monomereinheit aufweist. Im Zusammenhang mit der vorliegenden Erfindung wird unter dem Begriff "durchschnittlich Anzahl C-Atome pro Monomereinheit" die Anzahl C-Atome verstanden, welche sich aus der Summe der Anzahl C-Atome in den verwendeten Monomeren, geteilt durch die Anzahl der verwendeten Monomere berechnet. PA 612 ist das Polykondensationsprodukt aus 1,6-Hexamethylendiamin und 1,12-Dodecandisäure. Das heisst, die durchschnittliche Anzahl C-Atome pro Monomereinheit berechnet sich für PA 612 als (6+12):2 = 9.

Vorzugsweise liegt das ausgewählte Homopolyamid in der Mischung, aus der die Innenschicht aufgebaut ist, in einem Anteil von 2-55 Gew.-%, bevorzugt in einem Anteil von 15-45 Gew.-%, und besonders bevorzugt in einem Anteil von 25-35 Gew.-% vor. Ganz speziell bevorzugt wird ein Gehalt an Homopolyamid in der Mischung für die Innenschicht von 30 Gew.-%, jeweils bezogen auf 100 Gew.-% der Mischung.

Vorzugsweise liegt das ausgewählte Homopolyamid in der Mischung, aus der die Aussenschicht aufgebaut ist, in einem Anteil von mindestens 75 Gew.-%, bezogen auf 100 Gew.-% der Mischung, vor. Speziell bevorzugt wird ein Gehalt der Mischung für die Aussenschicht an Homopolyamid von 77.8 Gew.-%.

Bei Verwendung eines elastomeren Copolyolefins für die Innenschicht kommt bevorzugt EPM in Frage (= Copolyolefin aus Ethylen und Propylen). Alternativ wird ein Blend aus einem teilkristallinen Polyolefin und einem synthetischen olefinischen Kautschuk eingesetzt, wobei unter einem synthetischen olefinischen Kautschuk bei der vorliegenden Erfindung ein vernetzbares, elastomeres Copolyolefin verstanden wird.

Vorzugsweise ist der synthetische olefinische Kautschuk EPDM, das bevorzugt in vernetzter Form vorliegt. In einer bevorzugten Zusammensetzung enthält EPDM zwischen 55 und 75 Gew.-% Ethylen und zwischen 2 und 12 Gew.-% Dien, und Propylen. Der bevorzugte Dien-Anteil entspricht einem Anteil von 3-16 Doppelbindungen pro 1000 C-Atome. Zudem wird bevorzugt, dass das teilkristalline Polyolefin Polypropylen (PP) ist. Besonders bevorzugt ist der Blend aus einem teilkristallinen Polyolefin und einem synthetischen olefinischen Kautschuk in der Mischung, aus der die Innenschicht aufgebaut ist, ein EPDM/PP Blend. Solche Blends sind unter dem Handelsnamen Santoprene^{™} erhältlich, wobei Santoprene^{™} 101-80 und/oder Santoprene^{™} 121-75 M100 und/oder Santoprene^{™} 121-80 M100 ganz speziell bevorzugt und alle gut geeignet für die vorliegende Erfindung sind.

Thermoplastische Formmassen mit einer gewissen Ähnlichkeit zum hier vorliegenden Innenschichtmaterial sind übrigens in der EP 0 753 027 B1 offenbart. Als bevorzugte Polyamid-Komponenten werden dort aber PA 6, PA 66 und PA 12 genannt (vgl. Seite 6 Zeile 35), also solche Homopolyamide, welche die spezifischen Anforderungen an die ausgewählten Homopolyamide der vorliegenden Erfindung nicht verfüllen. Die gemäss der vorliegenden Erfindung spezifizierten Polyamide für die Aussenschicht wurden in der EP 0 753 027 B1 nicht erkannt.

Vorzugsweise liegt das elastomere Copolyolefin oder der Blend aus einem teilkristallinen Polyolefin und einem synthetischen olefinischen Kautschuk (beispielsweise Santoprene^{™} 101-80 oder Santoprene^{™} 121-75 M100 oder Santoprene^{™} 121-80 M 100) in der Mischung, aus der die erfindungsgemässe Innenschicht aufgebaut ist, in einem Anteil von 10-70 Gew.-%, bevorzugt in einem Anteil von 20-60 Gew.-%, und besonders bevorzugt in einem Anteil von 30-50 Gew.-%, jeweils bezogen auf 100 Gew.-% der Mischung, vor. Ganz speziell bevorzugt wird ein Gehalt der Mischung für die Innenschicht an Santoprene^{™} 101-80 (oder Santoprene^{™} 121-75 M100 oder Santoprene^{™} 121-80 M100) von ca. 40 Gew.-%.

Die vorliegende Erfindung soll nun an Hand von bevorzugten Ausführungsformen und Beispielen des erfindungsgemässen zweilagigen Kunststoff-Leitungsstücks und entsprechende Testresultaten näher erläutert werden. Die Beispiele dienen zur Illustration der Erfindung und sind nicht einschränkend zu verstehen.

Teststücke des erfindungsgemässen zweilagigen Kunststoff-Leitungsstücks wurden hergestellt, dabei umfasste die Mischung für die Innenschicht:

**Tabelle 2A, Innenschicht:**

| | | |
|---|---|---|
| Homopolyamid | PA 612 | 30.0 Gew.-% |
| Schlagzähmodifikator | TAFMER MC201 | 30.0 Gew.-% |
| Blend aus teilkristallinem Polyolefin und synthetischem olefinischem Kautschuk | SANTOPRENE^{™} 101-80 | 39.4 Gew.-% |
| Antioxidans | HOSTANOX PAR24 | 0.1 Gew.-% |
| Antioxidans | IRGANOX 1098 | 0.5 Gew.-% |
| Summe | | 100 Gew.-% |

Die Mischung für die Aussenschicht umfasste:

**Tabelle 2B, Aussenschicht:**

| | | |
|---|---|---|
| Homopolyamid | PA 612 | 77.8 Gew.-% |
| Schlagzähmodifikator | TAFMER MC201 | 20.0 Gew.-% |
| Hitzestabilisator | CuJ | 0.05 Gew.-% |
| Stabilisator | KJ/Ca-STEARAT 98/2 | 0.3 Gew.-% |
| Hitzestabilisator | BRÜGGOLEN H 20 | 0.5 Gew.-% |
| Antioxidans | IRGANOX MD1024 | 0.6 Gew.-% |
| EUTHYLENSCHWARZ 00-6005C4 | Schwarzfarbe | 0.75 Gew.-% |
| Summe | | 100 Gew.-% |

Es wurden in den Teststücken keinerlei Verstärkungen durch Füllstoffe eingeführt.

Zur Überprüfung der thermooxidativen Beständigkeit der auf dem Polyamid PA 612 basierenden einzelnen Versuchsprodukte sowie vom Santoprene-Material wurden daraus hergestellte, normierte Zugstäbe in einem Ofen auf verschiedenen Temperaturstufen über längere Zeit gelagert. Zu unterschiedlichen Zeitpunkten wurden Proben dem Ofen entnommen und anschliessend in Zugversuchen auf das Hitzealterungsverhalten getestet. Insbesondere interessierte eine mögliche Abnahme der mechanischen Werte (einerseits Zug E-Modul und andererseits Reissfestigkeit), die an den trockenen Zugstäben nach ISO-Norm 527 gemessen wurden.

**Tabelle 3, Hitzealterung bei 130 °C:**

| | **Zug E-Modul [MPa]** | | |
|---|---|---|---|
| Zeit [h] | **Aussenschicht** schwarz | **Innenschicht** schwarz | Santoprene^{™} schwarz |
| **0** | 1516 | 166 | 86 |
| **8** | 1437 | 158 | 70 |
| **48** | - | - | - |
| **150** | 1536 | 181 | 90 |
| **500** | 1500 | 206 | 152 |
| **1000** | 1587 | 218 | 178 |
| | | | |
| **0** | 100 % | 100 % | 100 % |
| **8** | 95 % | 95 % | 81% |
| **48** | - | - | - |
| **150** | 101% | 109% | 105% |
| **500** | 99 % | 124% | 177% |
| **1000** | 105% | 131 % | 207 % |

Die Bemerkung "schwarz" bezieht sich auf das Aussehen der Teststücke, herrührend von der schwarzen Einfärbung. Die Materialien können generell auch Russ enthalten.

**Tabelle 4, Hitzealterung bei 150 °C:**

| | **Zug E-Modul [MPa]** | | |
|---|---|---|---|
| Zeit [h] | **Aussenschicht** schwarz | **Innenschicht** schwarz | Santoprene^{™} schwarz |
| **0** | 1516 | 166 | 86 |
| **8** | 1437 | 134 | 92 |
| **48** | - | - | - |
| **150** | 1536 | 166 | 94 |
| **500** | 1530 | 251 | 168 |
| **1000** | 1648 | 140 | 273 |
| | | | |
| **0** | 100 % | 100 % | 100 % |
| **8** | 95 % | 81 % | 107% |
| **48** | - | - | - |
| **150** | 101% | 100 % | 109% |
| **500** | 101% | 151% | 195% |
| **1000** | 109% | 84 % | 317 % |

Es fällt auf, dass alle getesteten Schichtmaterialien die Lagerung über 1000 Stunden bei einer Temperatur von 130 °C bzw. 150 °C gut vertragen.

**Tabelle 5, Hitzealterung bei 170 °C:**

| | **Zug E-Modul [MPa]** | |
|---|---|---|
| Zeit [h] | **Aussenschicht** schwarz | **Innenschicht** schwarz |
| **0** | 1516 | 166 |
| **8** | 1426 | 213 |
| **48** | - | - |
| **150** | 1605 | 114 |
| **500** | 1603 | 177 |
| **1000** | 1725 | 175 |
| | | |
| **0** | 100 % | 100 % |
| **8** | 94 % | 128% |
| **48** | - | - |
| **150** | 106 % | 69 % |
| **500** | 106 % | 107% |
| **1000** | 114% | 105% |

Auch bei 170 °C haben die getesteten Schichtmaterialien die Lagerung über 1000 Stunden vertragen (Der E-Modul-Wert für die Innenschicht nach 150 Stunden war offenbar ein Ausreisser). Im Falle des Santoprene^{™} konnte aber diese Messung nicht mehr separat durchgeführt werden, weil das Santoprene^{™} einen Schmelzpunkt von ca. 162 °C aufweist und somit geschmolzen ist.

Aus diesen Resultaten kann geschlossen werden, dass gemäss den erfindungsgemässen zweilagigen Kunststoff-Leitungsstücken hergestellte, druckbeaufschlagte Flüssigkeitsleitungen kurzzeitige Spitzentemperaturen von 175 °C aushalten und damit die Anforderungen der Temperatur-Klasse 150 der PSA-Norm B22 6142 erfüllen.

**Tabelle 6, Hitzealterung bei 130 °C:**

| | **Reissfestigkeit [MPa]** | | |
|---|---|---|---|
| Zeit [h] | **Aussenschicht** schwarz | **Innenschicht** schwarz | Santoprene^{™} schwarz |
| **0** | 41 | 13 | 8 |
| **8** | 39 | 13 | 8 |
| **48** | - | - | - |
| **150** | 38 | 14 | 8 |
| **500** | 36 | 14 | 8 |
| **1000** | 37 | 15 | 8 |
| | | | |
| **0** | 100 % | 100 % | 100 % |
| **8** | 95 % | 100 % | 100 % |
| **48** | - | - | - |
| **150** | 93 % | 108% | 100 % |
| **500** | 88% | 108% | 100 % |
| **1000** | 90 % | 115% | 100 % |

Es fällt auf, dass alle getesteten Schichtmaterialien die Lagerung über 1000 Stunden bei einer Temperatur von 130 °C gut vertragen.

**Tabelle 7, Hitzealterung bei 150 °C:**

| | **Reissfestigkeit [MPa]** | | |
|---|---|---|---|
| Zeit [h] | **Aussenschicht** schwarz | **Innenschicht** schwarz | Santoprene^{™} schwarz |
| **0** | 41 | 13 | 8 |
| **8** | 38 | 13 | 7 |
| **48** | - | - | - |
| **150** | 38 | 14 | 7 |
| **500** | 36 | 6 | 4 |
| **1000** | 37 | 6 | 3 |
| | | | |
| **0** | 100 % | 100 % | 100 % |
| **8** | 93 % | 100 % | 88% |
| **48** | - | - | - |
| **150** | 93 % | 108% | 88% |
| **500** | 88% | 46 % | 50 % |
| **1000** | 90 % | 46 % | 38% |

Es fällt auf, dass die getesteten Schichtmaterialien (mit Ausnahme des Santoprene^{™}) die Lagerung über 1000 Stunden bei einer Temperatur von 150 °C recht gut vertragen. Die Innenschicht liegt noch im akzeptablen Bereich.

**Tabelle 8, Hitzealterung bei 170 °C:**

| | **Reissfestigkeit [MPa]** | |
|---|---|---|
| Zeit [h] | **Aussenschicht** schwarz | **Innenschicht** schwarz |
| **0** | 41 | 13 |
| **8** | 40 | 12 |
| **48** | - | - |
| **150** | 35 | 7 |
| **500** | 37 | 4 |
| **1000** | 45 | 4 |
| | | |
| **0** | 100 % | 100 % |
| **8** | 98% | 92 % |
| **48** | - | - |
| **150** | 85 % | 54 % |
| **500** | 90 % | 31 % |
| **1000** | 110 % | 31 % |

Es fällt auf, dass nun nicht mehr alle getesteten Schichtmaterialien die Lagerung über 1000 Stunden bei einer Temperatur von 170 °C vertragen. Für kurzzeitige Spitzentemperaturen in dieser Grössenordnung ist das Resultat der Innenschicht aber noch ausreichend. Das Santoprene^{™} konnte aus dem schon oben genannten Grund bei dieser Temperatur nicht separat gemessen werden, weil sein Schmelzpunkt unterhalb von 170 °C liegt.

Es liegen zudem Ergebnisse mit kompletten zweilagigen Kunststoff-Rohren gemäss der vorliegenden Erfindung nach der 150 °C Klasse vor, die im Folgenden ECOSYS C150 genannt wird:

**Tabelle 9, Kunststoff-Rohre:**

| **ECOSYS C150 zweilagig** | | | | |
|---|---|---|---|---|
| Prüfung | Originalrohr | 500 h bei 95 °C / 150 °C | 750 h bei 95 °C / 150 °C | 1000 h bei Extrembedingungen |
| Adhäsionstest | ok | ok | ok | ok |
| Schlag kalt | ok | ok | ok | ok |
| Dichtheit bei 23 °C/3bar | - | ok | ok | ok |
| Dichtheit bei 136 °C/3bar | ok | ok | ok | ok |
| Berstdruck bei 136 °C [bar] | 7.3 | 6.6 | 6.7 | 7.5-8.2 |
| Biegsamkeitstest | - | biegsam | biegsam | biegsam |

Diese Prüfungen wurden am nicht behandelten Originalrohr und an gelagerten Rohren vorgenommen, die während 500 Stunden bzw. während 750 Stunden einer Innentemperatur von 95 °C (Flüssigkeitsfüllung) und einer Umgebungstemperatur von 150 °C (Luft) ausgesetzt wurden. Die Extrembedingungen über die Dauer von 1000 Stunden umfassten das Aussetzen der Rohre einer Innentemperatur von 135 °C (Flüssigkeitsfüllung) und einer Umgebungstemperatur von 150 °C (Luft). Die zweilagigen Rohre, die gemäss der vorliegenden Erfindung aus den in der Tabelle 2 aufgeführten Materialien gefertigt wurden, haben diesen Test bestanden. Selbstverständlich zu erfüllende Bedingungen wurden nicht getestet.

Anwendungen des zweilagigen Kunststoff-Leitungsstücks gemäss der vorliegenden Erfindung umfassen das Herstellen von Rohrleitungen und/oder Schlauchleitungen, die als druckbeaufschlagte Fluidleitungen (für Flüssigkeiten, Dämpfe oder Gase), insbesondere als Kühlmittel-Leitungen, vorzugsweise in Automobilen eingebaut werden und betrieben werden. Die bevorzugte Verwendung ist also die als Fluidleitung für Automobile. Besonders bevorzugt ist dabei die Verwendung der Fluidleitung als Kühlleitung.

## Patentansprüche

1. Zweilagiges Kunststoff-Leitungsstück für druckbeaufschlagte Flüssigkeitsleitungen mit:
(a) einer Innenschicht, die aus einer ersten Mischung aufgebaut ist, welche ein elastomeres Copolyolefin oder einen Blend aus einem teilkristallinen Polyolefin und einem synthetischen olefinischen Kautschuk, sowie ein Homopolyamid umfasst; und
(b) einer Aussenschicht, die aus einer zweiten Mischung aufgebaut ist, welche ein Homopolyamid umfasst,
**dadurch gekennzeichnet, dass** beide Mischungen, aus denen die Innenschicht und die Aussenschicht aufgebaut sind, das gleiche Homopolyamid umfassen, dass jeder dieser Mischungen ein Schlagzähmodifikator aus der Klasse der säuremodifizierten Ethylen-α-Olefin-Copolymere beigemischt ist,
dass das Homopolyamid einen Schmelzpunkt von über 200 °C und durchschnittlich mindestens 8 C-Atome pro Monomereinheit aufweist und ausgewählt ist aus der Gruppe PA 610, PA 612, PA 614 und PA 616,
und dass das Homopolyamid in der Mischung, aus der die Aussenschicht aufgebaut ist, in einem Anteil von mindestens 65 Gew.-%, bezogen auf 100 Gew.-% der Mischung, vorliegt.

2. Zweilagiges Kunststoff-Leitungsstück nach Anspruch 1, **dadurch gekennzeichnet, dass** der Schlagzähmodifikator in der Mischung, aus der die Innenschicht aufgebaut ist, in einem Anteil von 2-55 Gew.-%, bezogen auf 100 Gew.-% der Mischung, vorliegt.

3. Zweilagiges Kunststoff-Leitungsstück nach Anspruch 1, **dadurch gekennzeichnet, dass** der Schlagzähmodifikator in der Mischung, aus der die Innenschicht aufgebaut ist, in einem Anteil von 15-45 Gew.-%, bezogen auf 100 Gew.-% der Mischung, vorliegt.

4. Zweilagiges Kunststoff-Leitungsstück nach Anspruch 1, **dadurch gekennzeichnet, dass** der Schlagzähmodifikator in der Mischung, aus der die Innenschicht aufgebaut ist, in einem Anteil von 25-35 Gew.-%, bezogen auf 100 Gew.-% der Mischung, vorliegt.

5. Zweilagiges Kunststoff-Leitungsstück nach einem der vorhergehenden Ansprüche, **dadurch gekennzeichnet, dass** der Schlagzähmodifikator in der Mischung, aus der die Aussenschicht aufgebaut ist, in einem Anteil von 1-50 Gew.-%, bezogen auf 100 Gew.-% der Mischung, vorliegt.

6. Zweilagiges Kunststoff-Leitungsstück nach einem der Ansprüche 1 bis 4, **dadurch gekennzeichnet, dass** der Schlagzähmodifikator in der Mischung, aus der die Aussenschicht aufgebaut ist, in einem Anteil von 10-30 Gew.-%, bezogen auf 100 Gew.-% der Mischung, vorliegt.

7. Zweilagiges Kunststoff-Leitungsstück nach einem der Ansprüche 1 bis 4, **dadurch gekennzeichnet, dass** der Schlagzähmodifikator in der Mischung, aus der die Aussenschicht aufgebaut ist, in einem Anteil von 15-25 Gew.-%, bezogen auf 100 Gew.-% der Mischung, vorliegt.

8. Zweilagiges Kunststoff-Leitungsstück nach einem der vorhergehenden Ansprüche, **dadurch gekennzeichnet, dass** das Homopolyamid in den beiden Mischungen, aus denen die Innenschicht und die Aussenschicht aufgebaut sind, PA 612 ist.

9. Zweilagiges Kunststoff-Leitungsstück nach Anspruch 1 oder 8, **dadurch gekennzeichnet, dass** das Homopolyamid in der Mischung, aus der die Innenschicht aufgebaut ist, in einem Anteil von 2-55 Gew.-%, bezogen auf 100 Gew.-% der Mischung, vorliegt.

10. Zweilagiges Kunststoff-Leitungsstück nach Anspruch 1 oder 8, **dadurch gekennzeichnet, dass** das Homopolyamid in der Mischung, aus der die Innenschicht aufgebaut ist, in einem Anteil von 15-45 Gew.-%, bezogen auf 100 Gew.-% der Mischung, vorliegt.

11. Zweilagiges Kunststoff-Leitungsstück nach Anspruch 1 oder 8, **dadurch gekennzeichnet, dass** das Homopolyamid in der Mischung, aus der die Innenschicht aufgebaut ist, in einem Anteil von 25-35 Gew.-%, bezogen auf 100 Gew.-% der Mischung, vorliegt.

12. Zweilagiges Kunststoff-Leitungsstück nach einem der Ansprüche 1 oder 8 bis 11, **dadurch gekennzeichnet, dass** das Homopolyamid in der Mischung, aus der die Aussenschicht aufgebaut ist, in einem Anteil von mindestens 75 Gew.-%, bezogen auf 100 Gew.-% der Mischung, vorliegt.

13. Zweilagiges Kunststoff-Leitungsstück nach einem der vorhergehenden Ansprüche, **dadurch gekennzeichnet, dass** der Schlagzähmodifikator aus der Klasse der säuremodifizierten Ethylen-α-Olefin-Copolymere in beiden Mischungen, aus denen die Innenschicht und die Aussenschicht aufgebaut sind, ein mit Maleinsäureanhydrid gepfropftes Ethylenpropylen/Ethylenbutylen-Copolymer ist.

14. Zweilagiges Kunststoff-Leitungsstück nach einem der vorhergehenden Ansprüche, **dadurch gekennzeichnet, dass** das elastomere Copolyolefin oder der Blend aus einem teilkristallinen Polyolefin und einem synthetischen olefinischen Kautschuk in der Mischung, aus der die Innenschicht aufgebaut ist, in einem Anteil von 10-70 Gew.-%, bezogen auf 100 Gew.-% der Mischung, vorliegt.

15. Zweilagiges Kunststoff-Leitungsstück nach einem der Ansprüche 1 bis 13, **dadurch gekennzeichnet, dass** das elastomere Copolyolefin oder der Blend aus einem teilkristallinen Polyolefin und einem synthetischen olefinischen Kautschuk in der Mischung, aus der die Innenschicht aufgebaut ist, in einem Anteil von 20-60 Gew.-%, bezogen auf 100 Gew.-% der Mischung, vorliegt.

16. Zweilagiges Kunststoff-Leitungsstück nach einem der Ansprüche 1 bis 13, **dadurch gekennzeichnet, dass** das elastomere Copolyolefin oder der Blend aus einem teilkristallinen Polyolefin und einem synthetischen olefinischen Kautschuk in der Mischung, aus der die Innenschicht aufgebaut ist, in einem Anteil von 30-50 Gew.-%, bezogen auf 100 Gew.-% der Mischung, vorliegt.

17. Zweilagiges Kunststoff-Leitungsstück nach einem der vorhergehenden Ansprüche, **dadurch gekennzeichnet, dass** die erste Mischung, aus der die Innenschicht aufgebaut ist, umfasst:
(i) 40 Gew.-% eines elastomeren Copolyolefins oder eines Blends aus einem teilkristallinen Polyolefin und einem synthetischen olefinischen Kautschuk;
(ii) 30 Gew.-% Homopolyamid; und
(iii) 30 Gew.-% mit Maleinsäureanhydrid gepfropftes Ethylenpropylen/Ethylenbutylen-Copolymer;
und dass die zweite Mischung, aus der die Aussenschicht aufgebaut ist, umfasst:
(iv) 77.8 Gew.-% Homopolyamid; und
(v) 20 Gew.-% mit Maleinsäureanhydrid gepfropftes Ethylenpropylen/Ethylenbutylen-Copolymer,
wobei die beiden Mischungen Additive enthalten können, die ausgewählt sind aus der Gruppe, die Antioxidantien, Stabilisatoren, Farbstoffe und Russ umfasst.

18. Zweilagiges Kunststoff-Leitungsstück nach einem der vorhergehenden Ansprüche, **dadurch gekennzeichnet, dass** der synthetische olefinische Kautschuk EPDM ist.

19. Zweilagiges Kunststoff-Leitungsstück nach Anspruch 18, **dadurch gekennzeichnet, dass** das EPDM vernetzt ist.

20. Zweilagiges Kunststoff-Leitungsstück nach einem der vorhergehenden Ansprüche, **dadurch gekennzeichnet, dass** das teilkristalline Polyolefin Polypropylen ist.

21. Zweilagiges Kunststoff-Leitungsstück nach einem der vorhergehenden Ansprüche, **dadurch gekennzeichnet, dass** der Blend aus einem teilkristallinen Polyolefin und einem synthetischen olefinischen Kautschuk ein EPDM/PP-Blend ist.

22. Zweilagiges Kunststoff-Leitungsstück nach einem der vorhergehenden Ansprüche, **dadurch gekennzeichnet, dass** es als Rohrleitung und/oder Schlauchleitung ausgebildet ist.

23. Verwendung eines zweilagigen Kunststoff-Leitungsstücks nach einem der Ansprüche 1 bis 22 als Fluidleitung für Automobile.

24. Verwendung eines zweilagigen Kunststoff-Leitungsstücks nach Anspruch 23 als Kühlleitung für Automobile.

## Claims

1. A two-layer plastic tubing part for pressurized liquid conduits having:
(a) an inner layer, which is formed from a first mixture, which comprises an elastomeric copolyolefin or a blend made of a partially crystalline polyolefin and a synthetic olefinic rubber, as well as a homopolyamide;
(b) an outer layer, which is formed from a second mixture, which comprises a homopolyamide,
**characterized in that** the two mixtures, from which the inner layer and the outer layer are formed, comprise the same homopolyamide, each of these mixtures has an impact toughness modifier from the class of acid-modified ethylene-α-olefin copolymers admixed, the homopolyamide has a melting point of greater than 200°C and an average of at least 8 C atoms per monomer unit and is selected from the group PA 610, PA 612, PA 614, and PA 616, and the homopolyamide in the mixture from which the outer layer is formed is present in a portion of at least 65 wt.-%, in relation to 100 wt.-% of the mixture.

2. The two-layer plastic tubing part according to Claim 1, **characterized in that** the impact toughness modifier in the mixture, from which the inner layer is formed, is present in a portion of 2-55 wt.-%, in relation to 100 wt.-% of the mixture.

3. The two-layer plastic tubing part according to Claim 1, **characterized in that** the impact toughness modifier in the mixture, from which the inner layer is formed, is present in a portion of 15-45 wt.-%, in relation to 100 wt.-% of the mixture.

4. The two-layer plastic tubing part according to Claim 1, **characterized in that** the impact toughness modifier in the mixture, from which the inner layer is formed, is present in a portion of 25-35 wt.-%, in relation to 100 wt.-% of the mixture.

5. The two-layer plastic tubing part according to one of the preceding claims, **characterized in that** the impact toughness modifier in the mixture, from which the outer layer is formed, is present in a portion of 1-50 wt.-%, in relation to 100 wt.-% of the mixture.

6. The two-layer plastic tubing part according to one of Claims 1 to 4, **characterized in that** the impact toughness modifier in the mixture, from which the outer layer is formed, is present in a portion of 10-30 wt.-%, in relation to 100 wt.-% of the mixture.

7. The two-layer plastic tubing part according to one of Claims 1 to 4, **characterized in that** the impact toughness modifier in the mixture, from which the outer layer is formed, is present in a portion of 15-25 wt.-%, in relation to 100 wt.-% of the mixture.

8. The two-layer plastic tubing part according to one of the preceding claims, **characterized in that** the homopolyamide in the two mixtures, from which the inner layer and the outer layer are formed, is PA 612.

9. The two-layer plastic tubing part according to Claim 1 or 8, **characterized in that** the homopolyamide in the mixture, from which the inner layer is formed, is present in a portion of 2-55 wt.-%, in relation to 100 wt.-% of the mixture.

10. The two-layer plastic tubing part according to Claim 1 or 8, **characterized in that** the homopolyamide in the mixture, from which the inner layer is formed, is present in a portion of 15-45 wt.-%, in relation to 100 wt.-% of the mixture.

11. The two-layer plastic tubing part according to Claim 1 or 8, **characterized in that** the homopolyamide in the mixture, from which the inner layer is formed, is present in a portion of 25-35 wt.-%, in relation to 100 wt.-% of the mixture.

12. The two-layer plastic tubing part according to Claim 1 or 8 to 11, **characterized in that** the homopolyamide in the mixture, from which the outer layer is formed, is present in a portion of at least 75 wt.-%, in relation to 100 wt.-% of the mixture.

13. The two-layer plastic tubing part according to one of the preceding claims, **characterized in that** the impact toughness modifier from the class of acid-modified ethylene-α-olefin copolymers in the two mixtures, from which the inner layer and the outer layer are formed, is an ethylene propylene/ethylene butylene copolymer which is grafted with maleic acid anhydride.

14. The two-layer plastic tubing part according to one of the preceding claims, **characterized in that** the elastomeric copolyolefin or the blend made of a partially crystalline polyolefin and a synthetic olefinic rubber in the mixture, from which the inner layer is formed, is present in a portion of 10-70 wt.-%, in relation to 100 wt.-% of the mixture.

15. The two-layer plastic tubing part according to one of Claims 1 to 13, **characterized in that** the elastomeric copolyolefin or the blend made of a partially crystalline polyolefin and a synthetic olefinic rubber in the mixture, from which the inner layer is formed, is present in a portion of 20-60 wt.-%, in relation to 100 wt.-% of the mixture.

16. The two-layer plastic tubing part according to one of Claims 1 to 13, **characterized in that** the elastomeric copolyolefin or the blend made of a partially crystalline polyolefin and a synthetic olefinic rubber in the mixture, from which the inner layer is formed, is present in a portion of 30-50 wt.-%, in relation to 100 wt.-% of the mixture.

17. The two-layer plastic tubing part according to one of the preceding claims, **characterized in that** the first mixture, from which the inner layer is formed, comprises:
(i) 40 wt.-% of an elastomeric copolyolefin or a blend made of a partially crystalline polyolefin and a synthetic olefinic rubber;
(ii) 30 wt.-% homopolyamide; and
(iii) 30 wt.-% ethylene propylene/ethylene butylene copolymer, which is grafted with maleic acid anhydride;
and **in that** the second mixture, from which the outer layer is formed, comprises:
(iv) 77.8 wt.-% homopolyamide; and
(v) 20 wt.-% ethylene propylene/ethylene butylene copolymer, which is grafted with maleic acid anhydride,
wherein the two mixtures can contain additives, which are selected from the group which comprises antioxidants, stabilizers, colorants, and carbon black.

18. The two-layer plastic tubing part according to one of the preceding claims, **characterized in that** the synthetic olefinic rubber is EPDM.

19. The two-layer plastic tubing part according to Claim 18, **characterized in that** the EPDM is cross-linked.

20. The two-layer plastic tubing part according to one of the preceding claims, **characterized in that** the partially crystalline polyolefin is polypropylene.

21. The two-layer plastic tubing part according to one of the preceding claims, **characterized in that** the blend made of a partially crystalline polyolefin and a synthetic olefinic rubber is an EPDM/PP blend.

22. The two-layer plastic tubing part according to one of the preceding claims, **characterized in that** it is formed as a pipeline and/or hose line.

23. A use of a two-layer plastic tubing part according to one of Claims 1 to 22 as a fluid line for automobiles.

24. The use of a two-layer plastic tubing part according to Claim 23 as a coolant line for automobiles.

## Revendications

1. Pièce de conduite en plastique à deux couches pour conduites de liquide pressurisées, comprenant :
(a) une couche intérieure constituée d'un premier mélange, lequel comprend une copolyoléfine élastomère ou un mélange polyoléfine semi-cristalline/caoutchouc oléfinique synthétique, ainsi qu'un homopolyamide ; et
(b) une couche extérieure constituée d'un deuxième mélange, lequel comprend un homopolyamide,
**caractérisée en ce que** les deux mélanges, à partir desquels sont constituées les couches intérieure et extérieure, comprennent le même homopolyamide, **en ce que** à chacun de ces mélanges est ajouté un modificateur de résilience de la classe des copolymères éthylène-α-oléfine modifiés par acide, **en ce que** l'homopolyamide présente un point de fusion supérieur à 200 °C et présente en moyenne au moins 8 atomes C par motif monomère et est sélectionné à partir du groupe PA 610, PA 612, PA 614 et PA 616, et **en ce que** l'homopolyamide, dans le mélange à partir duquel est constituée la couche extérieure, est présent dans une part d'au moins 65 % en poids sur 100 % en poids du mélange.

2. Pièce de conduite en plastique à deux couches selon la revendication 1, **caractérisée en ce que** le modificateur de résilience, dans le mélange à partir duquel est constituée la couche intérieure, est présent dans une part de 2 à 55 % en poids sur 100 % en poids du mélange.

3. Pièce de conduite en plastique à deux couches selon la revendication 1, **caractérisée en ce que** le modificateur de résilience, dans le mélange à partir duquel est constituée la couche intérieure, est présent dans une part de 15 à 45 % en poids sur 100 % en poids du mélange.

4. Pièce de conduite en plastique à deux couches selon la revendication 1, **caractérisée en ce que** le modificateur de résilience, dans le mélange à partir duquel est constituée la couche intérieure, est présent dans une part de 25 à 35 % en poids sur 100 % en poids du mélange.

5. Pièce de conduite en plastique à deux couches selon l'une des revendications précédentes, **caractérisée en ce que** le modificateur de résilience, dans le mélange à partir duquel est constituée la couche extérieure, est présent dans une part de 1 à 50 % en poids sur 100 % en poids du mélange.

6. Pièce de conduite en plastique à deux couches selon l'une des revendications 1 à 4, **caractérisée en ce que** le modificateur de résilience, dans le mélange à partir duquel est constituée la couche extérieure, est présent dans une part de 10 à 30 % en poids sur 100 % en poids du mélange.

7. Pièce de conduite en plastique à deux couches selon l'une des revendications 1 à 4, **caractérisée en ce que** le modificateur de résilience, dans le mélange à partir duquel est constituée la couche extérieure, est présent dans une part de 15 à 25 % en poids sur 100 % en poids du mélange.

8. Pièce de conduite en plastique à deux couches selon l'une des revendications précédentes, **caractérisée en ce que** l'homopolyamide, dans les deux mélanges à partir desquels sont constituées les couches intérieure et extérieure, est un PA 612.

9. Pièce de conduite en plastique à deux couches selon la revendication 1 ou 8, **caractérisée en ce que** l'homopolyamide, dans le mélange à partir duquel est constituée la couche intérieure, est présent dans une part de 2 à 55 % en poids sur 100 % en poids du mélange.

10. Pièce de conduite en plastique à deux couches selon la revendication 1 ou 8, **caractérisée en ce que** l'homopolyamide, dans le mélange à partir duquel est constituée la couche intérieure, est présent dans une part de 15 à 45 % en poids sur 100 % en poids du mélange.

11. Pièce de conduite en plastique à deux couches selon la revendication 1 ou 8, **caractérisée en ce que** l'homopolyamide, dans le mélange à partir duquel est constituée la couche intérieure, est présent dans une part de 25 à 35 % en poids sur 100 % en poids du mélange.

12. Pièce de conduite en plastique à deux couches selon l'une des revendications 1 ou 8 à 11, **caractérisée en ce que** l'homopolyamide, dans le mélange à partir duquel est constituée la couche extérieure, est présent dans une part d'au moins 75 % en poids sur 100 % en poids du mélange.

13. Pièce de conduite en plastique à deux couches selon l'une des revendications précédentes, **caractérisée en ce que** le modificateur de résilience issu de la classe des copolymères éthylène-α-oléfine modifiés par acide, dans les deux mélanges à partir desquels sont constituées les couches intérieure et extérieure, est un copolymère éthylènepropylène/éthylènebutylène greffé de l'anhydride de l'acide maléique.

14. Pièce de conduite en plastique à deux couches selon l'une des revendications précédentes, **caractérisée en ce que** la copolyoléfine élastomère ou le mélange polyoléfine semi-cristalline/caoutchouc oléfinique synthétique, dans le mélange à partir duquel est constituée la couche intérieure, est présent dans une part de 10 à 70 % en poids sur 100 % en poids du mélange.

15. Pièce de conduite en plastique à deux couches selon l'une des revendications 1 à 13, **caractérisée en ce que** la copolyoléfine élastomère ou le mélange polyoléfine semi-cristalline/caoutchouc oléfinique synthétique, dans le mélange à partir duquel est constituée la couche intérieure, est présent dans une part de 20 à 60 % en poids sur 100 % en poids du mélange.

16. Pièce de conduite en plastique à deux couches selon l'une des revendications 1 à 13, **caractérisée en ce que** la copolyoléfine élastomère ou le mélange polyoléfine semi-cristalline/caoutchouc oléfinique synthétique, dans le mélange à partir duquel est constituée la couche intérieure, est présent dans une part de 30 à 50 % en poids sur 100 % en poids du mélange.

17. Pièce de conduite en plastique à deux couches selon l'une des revendications précédentes, **caractérisée en ce que** le premier mélange, à partir duquel est constituée la couche intérieure, comprend :
(i) 40 % en poids d'une copolyoléfine élastomère ou d'un mélange polyoléfine semi-cristalline/caoutchouc oléfinique synthétique ;
(ii) 30 % en poids d'homopolyamide ; et
(iii) 30 % en poids de copolymère éthylènepropylène/éthylènebutylène greffé de l'anhydride de l'acide maléique ;
et **en ce que** le deuxième mélange, à partir duquel est constituée la couche extérieure, comprend :
(iv) 77,8 % en poids d'homopolyamide ; et
(v) 20 % en poids de copolymère éthylènepropylène/éthylènebutylène greffé de l'anhydride de l'acide maléique,
les deux mélanges pouvant contenir des additifs, lesquels sont choisis parmi le groupe des antioxydants, des stabilisateurs, des colorants et du noir de carbone.

18. Pièce de conduite en plastique à deux couches selon l'une des revendications précédentes, **caractérisée en ce que** le caoutchouc oléfinique synthétique est de l'EPDM.

19. Pièce de conduite en plastique à deux couches selon la revendication 18, **caractérisée en ce que** l'EPDM est réticulé.

20. Pièce de conduite en plastique à deux couches selon l'une des revendications précédentes, **caractérisée en ce que** la polyoléfine semi-cristalline est un polypropylène.

21. Pièce de conduite en plastique à deux couches selon l'une des revendications précédentes, **caractérisée en ce que** le mélange polyoléfine semi-cristalline/caoutchouc oléfinique synthétique est un mélange EPDM/PP.

22. Pièce de conduite en plastique à deux couches selon l'une des revendications précédentes, **caractérisée en ce qu'**elle est réalisée sous la forme d'une conduite et/ou d'un tuyau souple.

23. Utilisation d'une pièce de conduite en plastique à deux couches selon l'une des revendications 1 à 22 comme tuyauterie de fluide pour automobile.

24. Utilisation d'une pièce de conduite en plastique à deux couches selon la revendication 23 comme tuyauterie de refroidissement pour automobile.
